# EUROPEAN PATENT APPLICATION

(11) **EP 4 841 750 A1**
(43) Date of publication of application: **18.11.2026**
(21) Application number: 25213984.5
(22) Date of filing: 06.11.2025
(51) Int. Cl.: H01M 10/613, H01M 10/633, H01M 10/637, H01M 10/6554, H01M 10/6556, H01M 10/6568

(54) **ENERGY STORAGE SYSTEM AND LIQUID FEEDING AND DISCHARGING CONTROL METHOD THEREOF**

(30) Priority: 12.05.2025 CN 202510602441
(71) Applicant: Zhejiang Jinko Energy Storage Co., Ltd., Jiaxing, Zhejiang (CN)
(72) Inventor: WEN, Junyun, Jiaxing (CN); ZHANG, Luhua, Jiaxing (CN); LI, Jianhua, Jiaxing (CN); WANG, Shiming, Jiaxing (CN); SHI, Yanyan, Jiaxing (CN)
(74) Representative: Hautier IP - MC/EP

(57) **Abstract**

The present disclosure relates to the technical field of energy storage, and discloses an energy storage system and a method for controlling liquid feeding and discharging. The energy storage system includes a coolant loop, a refrigerant loop, a heat exchange device, a liquid cooling plate and a battery pack. The refrigerant loop includes a refrigerant main circuit and a refrigerant branch circuit. The heat exchange device includes a coolant pipeline communicated with the coolant loop and a refrigerant pipeline communicated with the refrigerant main circuit. The liquid cooling plate includes a coolant flow channel communicated with the coolant loop and a refrigerant flow channel communicated with the refrigerant branch circuit. The battery pack is attached to the liquid cooling plate. A liquid inlet of the refrigerant flow channel is provided with a temperature control switch. When a temperature of the battery pack meets a first preset condition, the temperature control switch is in a closed state, and the liquid cooling plate cools the battery pack through coolant. When a temperature of the battery pack meets a second preset condition, the temperature control switch is in an open state, and the liquid cooling plate cools the battery pack through coolant and refrigerant, thereby enabling the refrigerant to flow into the liquid cooling plate under a specific operating condition, which improves the safety of the battery pack, and thus reducing the operation cost of the energy storage system.

## Description

### TECHNICAL FIELD

The present disclosure relates to the technical field of energy storage, and in particular, to an energy storage system and a method for controlling liquid feeding and discharging of the energy storage system.

### BACKGROUND

At present, the energy storage system is mainly cooled by means of air cooling, liquid cooling, a combination of air cooling and liquid cooling, so as to control the temperature inside the energy storage system within a safe range, thereby ensuring the safety of the energy storage system during operation. When the energy storage system performs cooling in a liquid cooling manner, the liquid cooling plate may be attached to the battery pack for cooling, thereby enabling a coolant and/or a refrigerant flowing through the liquid cooling plate to take away most of heat generated by the battery pack during operation in a heat exchange manner, and thus ensuring the operation stability of the battery pack and prolonging the service life of the battery pack.

In the related art, if only one of the coolant and the refrigerant flows through the liquid cooling plate, the overall cooling effect of the liquid cooling plate is reduced. However, if the coolant and the refrigerant flow through the liquid cooling plate simultaneously, the overall energy consumption of the energy storage device will increase.

### SUMMARY

In view of this, embodiments of the present disclosure provide an energy storage system and a method for controlling liquid feeding and discharging thereof, so as to solve the technical problems in the related art that the cooling effect decreases when only one of the coolant or refrigerant flows, and the energy consumption increases when both the coolant and refrigerant flow simultaneously.

Embodiments of the present disclosure provide an energy storage system including a coolant loop, a refrigerant loop, a heat exchange device, a liquid cooling plate and a battery pack. The refrigerant loop includes a refrigerant main circuit and a refrigerant branch circuit. The heat exchange device includes a coolant pipeline and a refrigerant pipeline. The heat exchange device communicates with the coolant loop through the coolant pipeline. The heat exchange device communicates with the refrigerant main circuit through the refrigerant pipeline. The liquid cooling plate includes a coolant flow channel and a refrigerant flow channel. The liquid cooling plate communicates with the coolant loop through the coolant flow channel, and the liquid cooling plate communicates with the refrigerant branch circuit through the refrigerant flow channel. The battery pack is attached to the liquid cooling plate. A liquid inlet of the refrigerant flow channel is provided with a temperature control switch. When a temperature of the battery pack meets a first preset condition, the temperature control switch is in a closed state, and the liquid cooling plate cools the battery pack through coolant. When a temperature of the battery pack meets a second preset condition, the temperature control switch is in an open state, and the liquid cooling plate cools the battery pack through coolant and refrigerant.

The following beneficial effects can be brought: the coolant loop and the refrigerant loop exchange heat through the heat exchange device, thereby ensuring the coolant flowing into the liquid cooling plate to have a relatively low temperature and to absorb more heat, and thus improving the cooling effect of the liquid cooling plate on the battery pack. Additionally, the liquid cooling plate may also independently cool the battery pack through the coolant, or the coolant and the refrigerant jointly cool the battery pack so as to ensure that the temperature of the battery pack is always kept within a safe temperature range, thereby improving the stability and reliability of the energy storage system during the operation.

Additionally, the refrigerant may flow into the liquid cooling plate under a specific operating condition, enabling one part of the refrigerant to continue to exchange heat with the high-temperature coolant, enabling the other part of the refrigerant to absorb the heat of the battery pack together with the coolant, thereby achieving continuous flow of the coolant in the liquid cooling plate and the intermittent flow of the refrigerant in the liquid cooling plate, facilitating improving the safety of the battery pack in a high-power state or a high-temperature environment, reducing the control difficulty of the phase state, pressure and temperature of the refrigerant in the liquid cooling plate, and thus reducing the operation cost and the maintenance cost of the energy storage system.

In some embodiments, the temperature control switch includes a valve and a driving member. The valve is mounted in the refrigerant flow channel and rotatably connected to the refrigerant flow channel. The driving member is fixedly connected to the valve and configured to drive the valve to rotate relative to the refrigerant flow channel, so as to open or close the liquid inlet of the refrigerant flow channel. The valve further includes a first door panel and a second door panel which are connected to each other. The first door panel is provided with a through hole. The first door panel is located on a side of the second door panel away from the liquid inlet of the refrigerant flow channel. A first included angle is formed between the first door panel and the second door panel.

In some embodiments, the driving member is a shape memory alloy. Along a thickness direction of the liquid cooling plate, one end of the shape memory alloy is connected to the first door panel, and another end of the shape memory alloy is connected to a top wall of the refrigerant flow channel. When the temperature of the battery pack meets the second preset condition, the shape memory alloy can contract and drive the first door panel to move along a first direction to open the liquid inlet of the refrigerant flow channel. When the temperature of the battery pack meets the first preset condition, the shape memory alloy can return to an initial state and drive the first door panel to move along a second direction to close the liquid inlet of the refrigerant flow channel. The first direction is opposite to the second direction.

In some embodiments, the refrigerant flow channel is further provided with a groove. The temperature control switch includes a guide post and an elastic member. The guide post is provided on a bottom wall of the groove. The elastic member is sleeved on an outer wall of the guide post. One end of the elastic member is connected to the bottom wall of the groove, and another end of the elastic member is connected to the first door panel.

In some embodiments, the energy storage system further includes a liquid discharge valve mounted on the bottom wall of the groove. When a temperature of the battery pack meets the first preset condition, the liquid discharge valve is in an open state to discharge refrigerant in the groove. When a temperature of the battery pack meets the second preset condition, the liquid discharge valve is in a closed state to block the refrigerant in the groove from being discharged.

In some embodiments, the energy storage system further includes a control system and a detection device. The control system is electrically or signally connected to the detection device. The control system is electrically or signally connected to the liquid discharge valve and/or the driving member. The detection device is mounted on a side of the liquid cooling plate facing the battery pack and is configured to detect the temperature of the battery pack. The control system is configured to control the driving member to start or stop according to a detection result of the detection device, and/or configured to control the liquid discharge valve to open or close.

In some embodiments, the liquid cooling plate includes at least two coolant flow channels and at least one refrigerant flow channel. The coolant flow channels and the refrigerant flow channel are alternately arranged and distributed at intervals along a length direction and/or a width direction of the liquid cooling plate. The liquid inlet of the coolant flow channel is disposed adjacent to a liquid outlet of the refrigerant flow channel, and the liquid outlet of the coolant flow channel is disposed adjacent to the liquid inlet of the refrigerant flow channel.

In some embodiments, along the length direction and/or the width direction of the liquid cooling plate, the two coolant flow channels are symmetrically distributed relative to the refrigerant flow channel, a spacing between adjacent flow channels is L, and L is in a range of 25mm≤L≤45mm.

In some embodiments, along a thickness direction of the liquid cooling plate, the liquid cooling plate includes a heat exchange plate and a flow channel plate. A side of the heat exchange plate is attached to the battery pack. Another side of the heat exchange plate is connected to the flow channel plate to enclose the coolant flow channel and the refrigerant flow channel.

In some embodiments, the energy storage system further includes a compressor, a heat dissipation device and an expansion valve that are all disposed in the refrigerant main circuit. One end of the compressor is in communication with the liquid outlet of the refrigerant pipeline. Another end of the compressor is in communication with one end of the heat dissipation device. Another end of the heat dissipation device is in communication with one end of the expansion valve. Another end of the expansion valve is in communication with a liquid inlet of the refrigerant pipeline.

Embodiments of the present disclosure further provide a method for controlling liquid feeding and discharging for an energy storage system. The energy storage system includes a liquid cooling plate, a battery pack, a valve and a liquid discharge valve. The liquid cooling plate includes a coolant flow channel and a refrigerant flow channel. The method includes the following steps. A first temperature T1 of the battery pack is detected at the liquid inlet of the coolant flow channel. A second temperature T2 of the battery pack is detected at the liquid outlet of the coolant flow channel. When the first temperature and the second temperature are in a range of T1-T2<2°C, or the second temperature is in a range of T2<25°C, the valve is controlled to rotate along the second direction y, and the liquid discharge valve is controlled to open to discharge refrigerant in the refrigerant flow channel. When the first temperature and the second temperature are in a range of T1-T2≥2°C, or the second temperature is in a range of T2≥25°C, the valve is controlled to rotate along the first direction x, and the liquid discharge valve is controlled to be closed to block the refrigerant in the refrigerant flow channel from being discharged.

In some embodiments of the present disclosure, the control system may control the temperature control switch to be switched from the open state to the closed state when the temperature of the battery pack is in a safe temperature range, and control the temperature control switch to be switched from the open state to the closed state when the temperature difference of the cell is in the safe temperature difference range, thereby enabling the liquid cooling plate to independently cool the battery pack through the coolant. Additionally, the control system may not only control the temperature control switch to be switched from the closed state to the open state when the temperature of the battery pack exceeds the safe temperature range, but also may control the temperature control switch to be switched from the closed state to the open state when the temperature difference of the cell exceeds the safe temperature difference range, thereby enabling the liquid cooling plate cool the battery pack through the coolant and the refrigerant.

Through such configuration, the refrigerant can flow into the liquid cooling plate under the specific operating condition, thereby achieving continuous flow of the coolant in the liquid cooling plate and the intermittent flow of the refrigerant in the liquid cooling plate, which improves the safety of the battery pack in a high-power state or a high-temperature environment, and improves the uniformity of cooling the battery pack in any operating state by the liquid cooling plate, thus reducing the possibility of thermal runaway of the battery pack during the charging and discharging process, and improving the stability and reliability of the energy storage system during the operation.

It should be understood that the general description above and the detailed description in the following are merely illustrative, and cannot limit the present disclosure.

### BRIEF DESCRIPTION OF DRAWINGS

In order to better illustrate the technical solutions in embodiments of the present disclosure, the drawings used in the description of embodiments are briefly described as below. It is appreciated that the drawings described below are merely some embodiments of the present disclosure, and other drawings may be obtained by those skilled in the art according to these drawings without paying any creative efforts.
FIG. 1 is a schematic diagram of an energy storage system according to one or more embodiments of the present disclosure;
FIG. 2 is a top view of a liquid cooling plate according to one or more embodiments of the present disclosure;
FIG. 3 is a structural schematic diagram of a temperature control switch according to one or more embodiments of the present disclosure;
FIG. 4 is a structural schematic diagram of a liquid cooling plate and a temperature control switch;
FIG. 5 is a sectional view of a temperature control switch in a closed state; and
FIG. 6 is a sectional view of a temperature control switch in an open state.

### Reference signs:

1 - coolant loop;
2 - refrigerant loop;
   21 - refrigerant main circuit;
   22 - refrigerant branch circuit;
3 - heat exchange device;
4 - liquid cooling plate;
   41 - coolant flow channel;
      411 - coolant inlet;
      412 - coolant outlet;
   42 - refrigerant flow channel;
      421 - refrigerant inlet;
      422 - refrigerant outlet;
   43 - heat exchange plate;
   44 - flow channel plate;
5 - temperature control switch;
   51 - valve;
      511 - first door panel;
         511a - through hole;
      512 - second door panel;
      513 - hinge;
   52 - driving member;
      521 - temperature sensing section;
      522 - connecting section;
   53 - connecting frame;
      531 - groove;
      532 - elastic member;
6 - detection device;
   61 - first detection member;
   62 - second detection member;
7 - compressor;
8 - heat dissipation device;
9 - expansion valve.

The drawings are incorporated in and constitute a part of the description, which illustrate embodiments in accordance with the present disclosure and, together with the description, serve to explain the principles of the present disclosure.

### DESCRIPTION OF EMBODIMENTS

In order to better understand the technical solutions of the present disclosure, embodiments of the present disclosure are described in detail below in conjunction with the drawings.

It should be noted that the described embodiments are only some rather than all of embodiments of the present disclosure.

Terms used in embodiments of the present disclosure are only for the purpose of describing specific embodiments, and are not intended to limit the present disclosure. As used in embodiments of the present disclosure and the appended claims, the singular forms "a/an", "said", and "the" are intended to include the plural forms as well, unless the context clearly indicated otherwise.

It should be understood that the term "and/or" used in the context of the present disclosure is to describe a correlation relation of related objects, indicating that there may be three relations, e.g., A and/or B may indicate only A, both A and B, and only B. In addition, the symbol "/" in the context generally indicates that the relation between the objects in front and at the back of "/" is an "or" relationship.

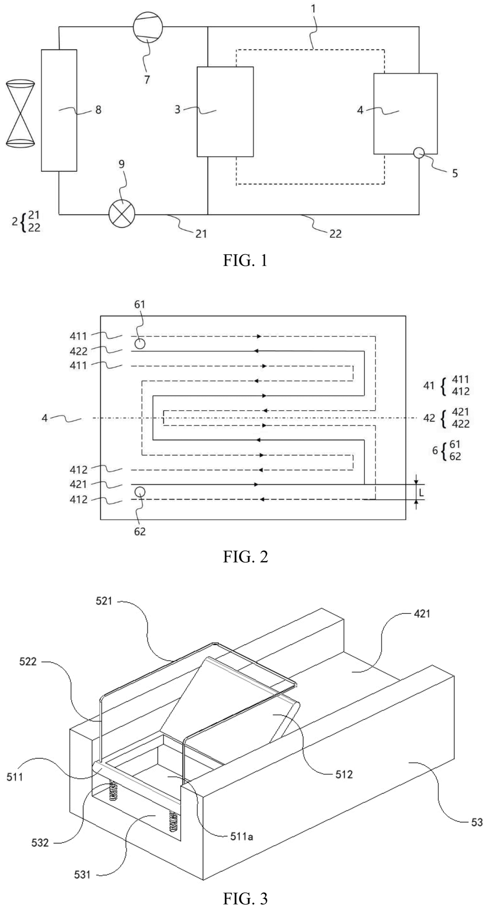

Some embodiments of the present disclosure provide an energy storage system. As shown in FIG. 1 and FIG. 2, the energy storage system includes a coolant loop 1, a refrigerant loop 2, a heat exchange device 3, a liquid cooling plate 4, and a battery pack (not shown in the drawings). The refrigerant loop 2 includes a refrigerant main circuit 21 and a refrigerant branch circuit 22. The heat exchange device 3 includes a coolant pipeline (not shown in the drawings) and a refrigerant pipeline (not shown in the drawings). The heat exchange device 3 communicates with the coolant loop 1 through the coolant pipeline and communicates with the refrigerant main circuit 21 through the refrigerant pipeline. The liquid cooling plate 4 includes a coolant flow channel 41 and a refrigerant flow channel 42. The liquid cooling plate 4 communicates with the coolant loop 1 through the coolant flow channel 41. The liquid cooling plate 4 communicates with the refrigerant branch circuit 22 through the refrigerant flow channel 42. The battery pack is attached to the liquid cooling plate 4.

A liquid inlet of the refrigerant flow channel 42 is further provided with a temperature control switch 5. When a temperature of the battery pack meets a first preset condition, the temperature control switch 5 is in a closed state, and the liquid cooling plate 4 cools the battery pack through the coolant. When a temperature of the battery pack meets a second preset condition, the temperature control switch 5 is in an open state, and the liquid cooling plate 4 cools the battery pack through both the coolant and the refrigerant.

In some embodiments of the present disclosure, the energy storage system includes a plurality of battery packs. Each battery pack is formed by connecting a plurality of cells in series/in parallel. Due to the fact that the cells generate heat during the charging and discharging process, the temperature of the battery packs is increased, so that the battery packs need to be cooled to control the temperature of the cells, thereby avoiding the risks of performance reduction, service life reduction or thermal runaway caused by excessively high temperature, improving the safety of the cells in the charging and discharging process, and thus improving the stability and reliability of the energy storage system during the operation.

Therefore, in the energy storage system provided in some embodiments, the battery pack is mounted on the liquid cooling plate 4 and attached to a surface of the liquid cooling plate 4. The coolant loop 1 is configured to circulate the coolant. The refrigerant loop 2 is configured to circulate the refrigerant. The coolant loop 1 and the refrigerant loop 2 are arranged in parallel and communicate with the liquid cooling plate 4, thereby enabling the energy storage system to cool the battery pack by means of liquid cooling.

The refrigerant loop 2 further includes a refrigerant main circuit 21 and a refrigerant branch circuit 22 which are arranged in parallel. The heat exchange device 3 further includes a coolant pipeline and a refrigerant pipeline. The coolant pipeline is communicated with the coolant loop 1. The refrigerant pipeline is communicated with the refrigerant main circuit 21. The liquid cooling plate 4 further includes a coolant flow channel 41 and a refrigerant flow channel 42. The coolant flow channel 41 is communicated with the coolant loop 1. The refrigerant flow channel 42 is communicated with the refrigerant branch circuit 22. The energy storage system further includes a temperature control switch 5. The temperature control switch 5 may be arranged at the communication position between the refrigerant main circuit 21 and the refrigerant branch circuit 22, and is configured to control the communication or disconnection between the refrigerant main circuit 21 and the refrigerant branch circuit 22.

Such configuration enables the coolant loop 1 and the refrigerant loop 2 to exchange heat through the heat exchange device, thereby ensuring the coolant flowing into the liquid cooling plate 4 to have a relatively low temperature and to absorb more heat, and thus improving the cooling effect of the liquid cooling plate 4 on the battery pack. Additionally, the liquid cooling plate 4 may also independently cool the battery pack through the coolant, or the coolant and the refrigerant jointly cool the battery pack so as to ensure that the temperature of the battery pack is always kept within a safe temperature range, thereby improving the stability and reliability of the energy storage system during the operation.

Since the battery pack undergoes temperature changes during charging and discharging process, if only the coolant continuously circulates in the liquid cooling plate 4, when the battery pack is in a high-power state or high-temperature environment, the heat absorbed by the coolant is limited and may not be dissipated quickly, which easily causes the temperature of the battery pack to exceed a safe temperature range, posing a risk of thermal runaway. If only the refrigerant continuously circulates in the liquid cooling plate 4, when the refrigerant flows in the refrigerant flow channel 42, a relatively large flow resistance will cause the pressure and temperature of the refrigerant to decrease, which easily affects the cooling effect of the liquid cooling plate 4 on the battery pack, the energy consumption of the energy storage system, and the operation stability of the energy storage system. If both the coolant and the refrigerant continuously circulate in the liquid cooling plate 4, the operation cost and the maintenance cost of the energy storage system will be significantly increased.

Therefore, the circulation of the refrigerant in the liquid cooling plate 4 needs to be controlled, thereby enabling the refrigerant to flow into the liquid cooling plate 4 under a specific operating condition, realizing continuous flow of the coolant in the liquid cooling plate 4 and intermittent flow of the refrigerant in the liquid cooling plate 4, thus improving the safety of the battery pack in a high-power state or a high-temperature environment, and reducing the control difficulty of the phase state, pressure and temperature of the refrigerant in the liquid cooling plate 4 by reducing the ratio of the refrigerant flow channel 42, and further reduce the operation cost and the maintenance cost of the energy storage system.

Therefore, in the energy storage system provided in some embodiments, the energy storage system may flow or block the refrigerant in the liquid cooling plate 4 through the operating state of the temperature control switch 5.

The temperature control switch 5 may be disposed at a liquid inlet of the refrigerant flow channel 42 for controlling the connection or disconnection between the refrigerant flow channel 42 and the refrigerant branch circuit 22. When the temperature of the battery pack meets a first preset condition (that is, the battery pack is in a medium-low power state or an ambient temperature is moderate), the temperature control switch 5 is in a closed state, thereby enabling the liquid cooling plate 4 to cool the battery pack through the coolant. When the temperature of the battery pack meets a second preset condition (that is, the battery pack is in a high power state or the ambient temperature is relatively high), the temperature control switch 5 is in an open state, thereby enabling the liquid cooling plate 4 to cool the battery pack through the coolant and the refrigerant.

In some embodiments, during the operation of the energy storage system, the high-temperature coolant that absorbs the heat of the battery pack may flow out of the coolant flow channel 41 of the liquid cooling plate 4, and flow into the coolant pipeline of the heat exchange device 3 through the coolant loop 1 to exchange heat with the refrigerant, and may flow back into the coolant flow channel 41 of the liquid cooling plate 4 through the coolant loop 1 after dissipating the heat, so as to continue to absorb the heat generated by the battery pack, thereby realizing continuous flow of the coolant in the liquid cooling plate 4.

In some embodiments, during the operation of the energy storage system, when the temperature of the battery pack meets the first preset condition, the temperature control switch 5 is in a closed state, and the refrigerant only needs to flow in the refrigerant main circuit 21, so that the high-temperature refrigerant that has absorbed the heat of the coolant may flow through the refrigerant main circuit 21 for heat dissipation into the heat dissipation assembly located on the refrigerant main circuit 21. After dissipating the heat, the high-temperature refrigerant may flow back into the refrigerant pipeline of the heat exchange device 3 through the refrigerant main circuit 21 for heat exchange with the coolant, so as to continue to absorb the heat of the high-temperature coolant.

When the temperature of the battery pack meets the second preset condition, the temperature control switch 5 is in the open state, and the refrigerant needs to flow in the refrigerant main circuit 21 and the refrigerant branch circuit 22 at the same time, thereby branching the low-temperature refrigerant that has dissipated heat. One part of the refrigerant flows into the refrigerant pipeline of the heat exchange device 3 through the refrigerant main circuit 21 to exchange heat with the coolant, and can converge with the high-temperature refrigerant flowing out of the refrigerant branch circuit 22 through the refrigerant main circuit 21 after absorbing heat. The other part of the refrigerant flows into the refrigerant flow channel 42 of the liquid cooling plate 4 through the refrigerant branch circuit 22 to absorb the heat generated by the battery pack, and can flow back to the refrigerant main circuit 21 through the refrigerant branch circuit 22 after absorbing heat for confluence. After confluence, the high-temperature refrigerant flows into the heat dissipation assembly located on the refrigerant main circuit 21 through the refrigerant main circuit 21 to dissipate heat, and flows into the heat exchange device 3 and the liquid cooling plate 4 again after dissipating the heat, so as to continue to absorb the heat of the high-temperature coolant and the heat of the battery pack, thereby realizing intermittent flow of the refrigerant in the liquid cooling plate 4.

In such configuration, the refrigerant may flow into the liquid cooling plate 4 under a specific operating condition, enabling one part of the refrigerant to continue to exchange heat with the high-temperature coolant, enabling the other part of the refrigerant to absorb the heat of the battery pack together with the coolant, thereby achieving continuous flow of the coolant in the liquid cooling plate 4 and the intermittent flow of the refrigerant in the liquid cooling plate 4, which facilitates to improving the safety of the battery pack in a high-power state or a high-temperature environment, reducing the control difficulty of the phase state, pressure and temperature of the refrigerant in the liquid cooling plate 4, and thus reducing the operation cost and the maintenance cost of the energy storage system.

The temperature control switch 5 located at the liquid inlet of the refrigerant flow channel 42 may control the change of the operating state of the temperature control switch 5 according to a preset program through a sensor, a control system, a driving mechanism and a power supply module, or may actively change the operating state of the temperature control switch 5 according to the temperature of the battery pack through its own characteristics (for example, the phase change characteristic of the nickel-titanium alloy). There may be a gap between the coolant flow channel 41 and the refrigerant flow channel 42 located in the liquid cooling plate 4, so as to avoid the risk of mutual influence when the coolant and the refrigerant flow simultaneously in the liquid cooling plate 4.

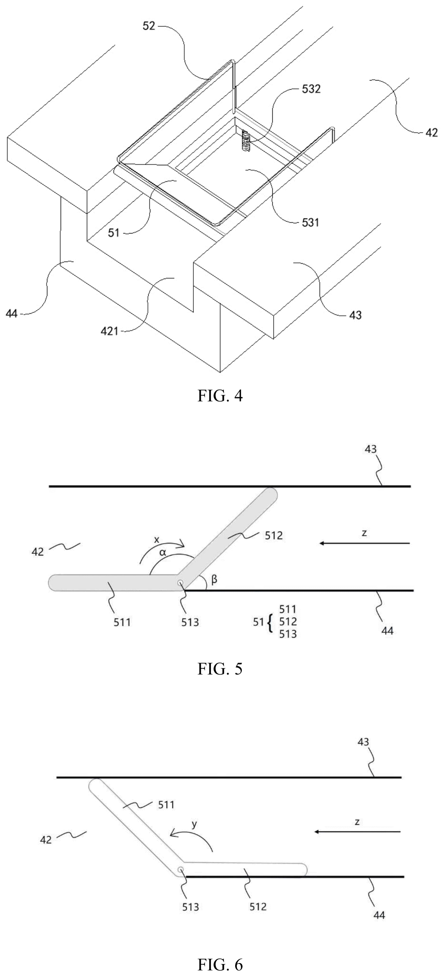

In some embodiments, as shown in FIG. 4, FIG. 5, and FIG. 6, along the thickness direction of the liquid cooling plate 4, the liquid cooling plate 4 includes a heat exchange plate 43 and a flow channel plate 44. One side of the heat exchange plate 43 is attached to the battery pack, and the other side of the heat exchange plate 43 is connected to the flow channel plate 44, which enclose to form the coolant flow channel 41 and the refrigerant flow channel 42.

In some embodiments of the present disclosure, the heat exchange plate 43 and the flow channel plate 44 may be detachably connected by using a sealing member (for example, a sealing rubber strip) and a fastener (for example, a bolt), thereby periodically cleaning the flow channel (that is, the coolant flow channel 41 and the refrigerant flow channel 42) of the flow channel plate 44, and thus avoiding the possibility of the reduced operating performance of the liquid cooling plate 4 due to blocking of the flow channel. Additionally, when the heat exchange plate 43 and/or the flow channel plate 44 are damaged, only the corresponding damaged components need to be replaced without replacing the liquid cooling plate 4, which is beneficial to reducing the maintenance cost.

The heat exchange plate 43 and the flow channel plate 44 may also be fixedly connected by welding, which is beneficial to improving the sealing performance of each flow channel in the liquid cooling plate 4 and improving the overall structural stability and structural strength of the liquid cooling plate 4.

Such configuration may configure the liquid cooling plate 4 as a split structure, thereby separately processing the heat exchange plate 43 and the flow channel plate 44, which helps to reducing the overall processing difficulty of the liquid cooling plate 4, and thus better meeting the actual processing needs.

In some embodiments, as shown in FIG. 1, the energy storage system further includes a compressor 7, a heat dissipation device 8, and an expansion valve 9. The compressor 7, the heat dissipation device 8, and the expansion valve 9 are all disposed in the refrigerant main circuit 21 to form the above heat dissipation assembly for cooling the refrigerant.

In some embodiments, one end of the compressor 7 communicates with the liquid outlet of the refrigerant pipeline. The other end of the compressor 7 communicates with one end of the heat dissipation device 8. The other end of the heat dissipation device 8 communicates with one end of the expansion valve 9. The other end of the expansion valve 9 communicates with the liquid inlet of the refrigerant pipeline.

During the flow of the refrigerant, after the refrigerant completes heat exchange with the high-temperature coolant in the heat exchange device 3, high-temperature and low-pressure liquid refrigerant flows out of the liquid outlet of the refrigerant pipeline. The high-temperature low-pressure liquid refrigerant then flows into the compressor 7 through the refrigerant loop 2 for compression, forming high-temperature and high-pressure gaseous refrigerant. After the high-temperature high-pressure gaseous refrigerant flows out of the compressor 7, the high-temperature high-pressure gaseous refrigerant flows into the heat dissipation device 8 through the refrigerant loop 2 for condensation and heat dissipation to form a low-temperature high-pressure liquid refrigerant. Once the low-temperature and high-pressure liquid refrigerant flows out of the heat dissipation device 8, the low-temperature high-pressure liquid refrigerant flows through the expansion valve 9 through the refrigerant loop 2 to be converted into a low-temperature low-pressure liquid refrigerant. Then, the low-temperature low-pressure liquid refrigerant may flow back into the heat exchange device 3 through the liquid inlet of the refrigerant pipeline for continuous heat exchange with the high-temperature coolant.

The compressor 7 is configured to increase the temperature and the pressure of a refrigerant to create certain condition for subsequent heat dissipation. The heat dissipation device 8 (e.g., a finned heat exchanger) functions as a condenser to transfer the heat of the refrigerant to the external environment. The expansion valve 9 is configured to regulate the flow rate and pressure of the refrigerant to prepare for subsequent evaporation. The heat exchange device 3 functions as an evaporator to enable the refrigerant to absorb heat of the coolant in a refrigerant pipeline of the refrigerant and evaporate the refrigerant into a gaseous state, and then flow back to the compressor 7.

Such configuration can realize the heat dissipation circulation of the refrigerant in the refrigerant main circuit, so that the refrigerant that has absorbed heat may quickly dissipate heat, thereby ensuring the cooling effect of the liquid cooling plate 4 and the stable operation of the energy storage system.

In some embodiments, as shown in FIG. 3, FIG. 4, FIG. 5 and FIG. 6, the temperature control switch 5 includes a valve 51 and a driving member 52. The valve 51 is mounted in the refrigerant flow channel 42 and is rotatably connected to the refrigerant flow channel 42. The driving member 52 is fixedly connected to the valve 51 and is configured to drive the valve 51 to rotate relative to the refrigerant flow channel 42, so as to open or close the liquid inlet of the refrigerant flow channel 42.

The valve 51 further includes a first door panel 511 and a second door panel 512 connected to each other. The first door panel 511 is provided with a through hole 511a. The first door panel 511 is located on a side of the second door panel 512 away from the liquid inlet of the refrigerant flow panel 42. A first included angle is formed between the first door panel 511 and the second door panel 512.

In some embodiments of the present disclosure, the temperature control switch 5 further includes a hinge 513. The valve 51 is rotatably connected to an inner wall of the refrigerant flow channel 42 through the hinge 513, so that the temperature control switch 5 can be opened or closed in a manner of rotating the valve 51 relative to the refrigerant flow channel 42, which is beneficial to improving the response speed and control precision of the temperature control switch 5, thereby enabling the driving member 52 to control an opening degree of the valve 51 according to the temperature of the battery pack, thus accurately adjusting the flow of the refrigerant flowing into the refrigerant flow channel 42, and further saving the energy and reducing the energy consumption. Additionally, the rotary connection can also reduce the wear of the valve 51, which is beneficial to improving the service life and sealing reliability of the temperature control switch 5, and further reducing the number of parts required by the temperature control switch 5, and thus reducing the production cost of the temperature control switch 5.

In some embodiments, when the temperature of the battery pack meets the first preset condition, the temperature control switch 5 is in a closed state. Then the valve 51 can rotate relative to the refrigerant flow channel 42 under the action of the driving member 52, and the valve 51 rotates along the second direction y until the first door panel 511 and the bottom wall of the refrigerant flow channel 42 are parallel to each other. Since a first included angle is provided between the first door panel 511 and the second door panel 512 and a second included angle complementary to the first included angle is provided between the second door panel 512 and the bottom wall of the refrigerant flow channel 42, the second door panel 512 may be perpendicular to the bottom wall of the refrigerant flow channel 42, or may be obliquely arranged relative to the bottom wall of the refrigerant flow channel 42.

The second door panel 512 is configured to block the refrigerant branch circuit 22 and the refrigerant flow panel 42, so as to block the refrigerant in the refrigerant branch circuit 22 from flowing into the refrigerant flow panel 42 along the third direction z, thereby enabling the liquid cooling plate 4 to separately cool the battery pack by the coolant, meeting the need of cooling the battery pack in a high-power state or a high-temperature environment, thus enabling the energy storage system to keep operating with low energy consumption, further facilitating the energy conservation and reducing the operating cost.

In some embodiments, when the temperature of the battery pack meets the second preset condition, the temperature control switch 5 is in an open state. Then the valve 51 may rotate relative to the refrigerant flow channel 42 under the action of the driving member 52, and the valve 51 rotates along the first direction x until the second door panel 512 and the bottom wall of the refrigerant flow channel 42 are parallel to each other. Since a first included angle is provided between the first door panel 511 and the second door panel 512, and the first door panel 511 is provided with a through hole 511a, the first door panel 511 may be perpendicular to the bottom wall of the refrigerant flow channel 42, or may be arranged obliquely relative to the bottom wall of the refrigerant flow channel 42.

The first door panel 511 is configured to communicate the refrigerant branch circuit 22 and the refrigerant flow panel 42, thereby enabling the refrigerant in the refrigerant branch circuit 22 to flow into the refrigerant flow panel 42 along the third direction z through the through hole 511a, enabling the liquid cooling plate 4 to jointly cool the battery pack through the coolant and the refrigerant, thus meeting the need of cooling the battery pack in a high-power state or a high-temperature environment, further effectively cooling the battery pack by the liquid cooling plate 4, thus improving safety of the battery pack during charging and discharging, and further improving the stability and the reliability of the energy storage system during the operation.

In some embodiments, the first door panel 511 and the second door panel 512 are integrally formed.

In some embodiments, as shown in FIG. 5 and FIG. 6, a first included angle between the first door panel 511 and the second door panel 512 is α, which is in a range of 120°≤α≤150°. A second included angle β is complementary to the first included angle.

In some embodiments of the present disclosure, the first included angle α between the first door panel 511 and the second door panel 512 may be, for example, 120°, 121°, 122°, 123°, 124°, 125°, 126°, 127°, 128°, 129°, 130°, 131°, 132°, 133°, 134°, 135°, 136°, 137°, 138°, 139°, 140°, 141°, 142°, 143°, 144°, 145°, 146°, 147°, 148°, 149°, 150°, or the like.

When the first included angle between the first door panel 511 and the second door panel 512 is too small (for example, α<120°), the first included angle between the two may be one of an acute angle, a right angle, or an obtuse angle. When the first included angle is an acute angle or a right angle, during the process of the flow of the refrigerant along the third direction z, the second door panel 512 has the possibility of deforming under the impact of the refrigerant, thereby easily resulting in a gap generated between the second door panel 512 and the top wall of the refrigerant flow channel 42, enabling the refrigerant to flow into the refrigerant flow channel 42 through the gap, and thus resulting in a risk that the temperature control switch 5 is prone to leakage in a closed state. When the first included angle is an obtuse angle with a relatively small degree, the degree of the second included angle complementary to the first included angle is relatively large, resulting in a relatively long rotation stroke of the valve 51 when the temperature control switch 5 changes from the closed state to the open state.

When the first included angle between the first door panel 511 and the second door panel 512 is too large (for example, α>150°), since the valve 51 is mounted in the refrigerant flow panel 42, the sizes of the first door panel 511 and the second door panel 512 are limited by the internal space of the refrigerant flow panel 42. If the first included angle between the first door panel 511 and the second door panel 512 is too large, the size of the first door panel 511 and/or the second door panel 512 along the third direction z is easily increased, so that the driving member 52 needs to provide a larger driving force to drive the valve 51 to rotate.

When the first angle between the first door panel 511 and the second door panel 512 is in a range of 120°α≤150°. The first angle between the first door panel 511 and the second door panel 512 is an obtuse angle. Sizes of the first door panel 511 and the second door panel 512 along the third direction z are proper.

When the temperature control switch 5 is in the closed state, the second door panel 512 is obliquely arranged relative to the bottom wall of the refrigerant flow channel 42 and abuts against the top wall of the refrigerant flow channel 42. During the process of the flow of the refrigerant along the third direction z, the refrigerant continuously impacts the second door panel 512 and causes the second door panel 512 to rotate along the second direction y. However, since the second door panel 512 is located on the side of the first door panel 511 close to the liquid inlet of the refrigerant flow channel 42, the second door panel 512 may gradually increase the acting force between the second door panel 512 and the top wall of the refrigerant flow channel 42 under the impact of the refrigerant, thereby effectively blocking the refrigerant from flowing along the third direction z, and thus improving the sealing performance of the temperature control switch 5 in the closed state.

When the temperature control switch 5 is switched from the closed state to the open state, the driving member 52 only needs to drive the valve 51 to rotate along the first direction x by a small angle to open the gap between the second door panel 512 and the top wall of the refrigerant flow panel 42, so that the refrigerant can flow into the refrigerant flow panel 42 through the gap, which is beneficial to reducing the control difficulty of the temperature control switch 5 during the process of changing the operating state. Additionally, the degree of the second included angle complementary to the first included angle is relatively small, thereby resulting a relatively short rotation stroke of the valve 51, enabling the temperature control switch 5 to easily change its operating state.

Therefore, by configuring the first included angle between the first door panel 511 and the second door panel 512 to be an obtuse angle in a range of 120°≤α≤150°, the possibility that the valve 51 rotates freely under the impact of the refrigerant can be reduced, thereby improving the sealing performance of the temperature control switch 5 in the closed state, further reducing the control difficulty of the temperature control switch 5 during the process of changing the operating state, and thus ensuring the stability and reliability of the energy storage system during the operation.

In some embodiments, the second door panel 512 is provided with a sealing member. When the temperature control switch 5 is in the closed state, the second door panel 512 abuts against the inner wall of the refrigerant flow channel 42 through the sealing member.

In some embodiments of the present disclosure, by providing the sealing member, the second door panel 512 may be sealingly connected to the inner wall of the refrigerant flow panel 42, so as to improve sealing performance between the second door panel 512 and the refrigerant flow panel 42, thereby further reducing the possibility that the refrigerant flows into the refrigerant flow panel 42 when the temperature control switch 5 is in a closed state.

In some embodiments, the side wall of the second door panel 512 may be provided with an accommodating groove for accommodating the sealing member, so as to reduce the possibility that the sealing member is separated from the second door panel 512 during the rotation of the valve 51, thereby improving the stability and reliability of the connection between the second door panel 512 and the sealing member.

In some embodiments, the projection of the sealing member along the third direction z may be one of a C shape, a U shape, or an O shape, so that when the second door panel 512 abuts against the top wall of the refrigerant flow channel 42 through the sealing member, the second door panel 512 may also abut against the side wall of the refrigerant flow channel 42 through the sealing member, and even may also abut against the bottom wall of the refrigerant flow channel 42 through the sealing member, thereby realizing blocking of the second door panel 512 at the liquid inlet of the refrigerant flow channel 42, which is beneficial to improving the reliability of the sealing connection between the second door panel 512 and the inner wall of the refrigerant flow channel 42.

It should be noted that, when the second door panel 512 is sealingly connected to the inner wall of the refrigerant flow channel 42 through the sealing member, during the process of changing the operating state of the temperature control switch 5, the acting force applied by the driving member 52 to the valve 51 increases accordingly to overcome the friction force between the sealing member and the inner wall of the refrigerant flow channel 42, thereby ensuring the smooth rotation of the valve 51 along the first direction x or the second direction y, thus ensuring the flexibility and reliability of the temperature control switch 5.

In some embodiments, as shown in FIG. 3, FIG. 4, FIG. 5, and FIG. 6, the driving member 52 is a shape memory alloy. Along the thickness direction of the liquid cooling plate 4, one end of the shape memory alloy is connected to the first door panel 511, and the other end of the shape memory alloy is connected to the top wall of the refrigerant flow channel 42.

When the temperature of the battery pack meets a second preset condition, the shape memory alloy can contract and drive the first door panel 511 to move along a first direction x to open the liquid inlet of the refrigerant flow channel 42. When the temperature of the battery pack meets a first preset condition, the shape memory alloy can return to an initial state and drive the first door panel 511 to move along a second direction y to close the liquid inlet of the refrigerant flow channel 42. The first direction x is opposite to the second direction y.

In some embodiments of the present disclosure, when the driving member 52 is a shape memory alloy, the driving member 52 may drive the valve 51 to rotate along the first direction x or the second direction y through its own properties according to the temperature of the battery pack, thereby enabling the temperature control switch 5 to be controlled to switch between the closed state and the open state, and enabling the temperature control switch 5 to actively change its operating state according to the temperature of the battery pack, which is beneficial to improving the sensitivity of the temperature control switch 5 without being controlled by signals of components such as a sensor and a control system, enabling the temperature control switch 5 to have a faster response speed, and thus ensuring the safety and service life of the battery pack. Additionally, such configuration may reduce components such as the sensor, the control system, and the power supply module that cooperate with the temperature control switch 5 in the energy storage system, which is beneficial to simplifying the overall complexity and energy consumption of the energy storage system, thereby reducing the operation cost of the energy storage system. In addition, the shape memory alloy has good stability during the deformation process, and also has good corrosion resistance and a relatively long service life, thereby preventing the easy wear of mechanical components of the driving member 52 during its movement, further ensuring the stability and reliability of the driving member 52 during the operation, and thus significantly prolonging the service life of the temperature control switch 5.

In some embodiments, since the shape memory alloy is sensitive to the temperature change, the shape memory alloy may sense the temperature of the battery pack in real time through the liquid cooling plate 4 and may deform with the temperature change of the battery pack.

During the deformation of the shape memory alloy, since the shape memory alloy has a preset shape in the high-temperature phase (austenite phase) and may be stretched and deformed by an external force in the low-temperature phase (martensite phase), when the temperature of the battery pack exceeds a safe temperature range, the crystal structure inside the shape memory alloy changes from the martensite phase to the austenite phase, thereby generating a contraction force and restoring to the preset shape (i.e., the shape memory alloy is contracted and deformed) in the high-temperature phase. When the temperature of the battery pack drops back to the safe temperature range, the crystal structure inside the shape memory alloy changes from the austenite phase to the martensite phase, thereby generating a stretching force and deforming to the preset shape (i.e., the shape memory alloy is stretched and deformed) in the low-temperature phase.

The driving member 52 further includes a temperature sensing section 521 and a connecting section 522 connected to each other. The temperature sensing section 521 is connected to the top wall of the refrigerant flow channel 42. The connecting section 522 is connected to an end of the first door panel 511 away from the second door panel 512.

When the temperature sensing section 521 senses that the temperature of the battery pack does not exceed the safe temperature range (that is, when the temperature of the battery pack meets the first preset condition), the entire shape memory alloy may be maintained in the initial preset shape (that is, the preset shape of the low-temperature phase) to limit the rotation of the first door panel 511 along the first direction x, thereby ensuring the sealing performance of the temperature control switch 5 in the closed state.

When the temperature sensing section 521 senses that the temperature of the battery pack exceeds the safe temperature range (that is, the temperature of the battery pack meets the second preset condition), the entire shape memory alloy may deform while the temperature of the battery pack exceeds the safe temperature range, and maintain the deformed preset shape (that is, the preset shape of the high-temperature phase), thereby enabling the first door panel 511 to be pulled to rotate along the first direction x, then enabling the temperature control switch 5 to be timely switched from the closed state to the open state, enabling the refrigerant to flow into the refrigerant flow channel 42 through the first through hole 511a of the first door panel 511, and thus enabling the liquid cooling plate 4 to cool the battery pack through both the coolant and the refrigerant.

When the temperature sensing section 521 senses that the temperature of the battery pack drops to the safe temperature range, the entire shape memory alloy may restore to the initial preset shape (i.e., the preset shape of the low-temperature phase) while the temperature of the battery pack drops back to the safe temperature range, thereby enabling the first door panel 511 to be driven to rotate along the second direction y, and enabling the temperature control switch 5 to be timely switched from the open state to the closed state, blocking the liquid inlet of the refrigerant flow channel 42 through the second door panel 512, and thus enabling the liquid cooling plate 4 to independently cool the battery pack through the coolant.

In some embodiments, the top wall of the refrigerant flow channel 42 is provided with a cavity (not shown in the drawings) for accommodating the temperature sensing section 521, enabling the position-limited connection between the temperature-sensing section 521 of the shape memory alloy and the top wall of the refrigerant flow channel 42, thereby enabling the shape memory alloy to drive the first door panel 511 to rotate along the first direction x or the second direction y through the connecting section 522 of the shape memory alloy during the deformation.

In some embodiments, when the driving member 52 is a shape memory alloy. The material of the driving member 52 may be nickel-titanium alloy, such as Ni50Ti48Zr2, thereby enabling a phase transition temperature of the driving member 52 to be 25°C The shape memory alloy having different phase transition temperatures may also be obtained by changing the ratio of different elements in the material and/or increasing or decreasing the elements.

In some embodiments, the temperature sensing section 521 and the connecting section 522 are integrally formed.

In some embodiments, as shown in FIG. 3 and FIG. 4, the refrigerant flow channel 42 is further provided with a groove 531. The temperature control switch 5 further includes a guide post (not shown in the drawings) and an elastic member 532. The guide post is disposed on a bottom wall of the groove 531. The elastic member 532 is sleeved on an outer wall of the guide post. One end of the elastic member 532 is connected to the bottom wall of the groove 531, and the other end of the elastic member 532 is connected to the first door panel 511.

In some embodiments of the present disclosure, the groove 531 is configured to accommodate the guide post and the elastic member 532. The elastic member 532 may elastically deform and is configured to provide a pulling force to the first door panel 511, thereby enabling the first door panel 511 to be kept parallel to the bottom wall of the refrigerant flow channel 42, improving the sealing performance of the temperature control switch 5 in the closed state, and facilitating the rotation of the valve 51 along the second direction y during the transition from the open state to the closed state, further improving the smoothness of reconfiguring the valve 51, and enabling the guide post to limit the deformation direction of the elastic member 532 during the deformation, avoiding the situation such as dislocation of the elastic member 532 during the elastic deformation, and thus smoothly resetting the elastic member 532.

In some embodiments, when the temperature sensing section 521 senses that the temperature of the battery pack does not exceed the safe temperature range (that is, the temperature of the battery pack meets the first preset condition), the temperature of the battery pack (that is, the temperature of the shape memory alloy) is lower than the phase change temperature of the shape memory alloy, thereby enabling the contraction force of the shape memory alloy to be lower than the pulling force of the elastic member 532, keeping the first door panel 511 to be parallel to the bottom wall of the refrigerant flow channel 42, further obliquely disposing the second door panel 512 relative to the bottom wall of the refrigerant flow channel 42, and thus keeping the temperature control switch 5 to be kept in the closed state to block the liquid inlet of the refrigerant flow channel 42 and thus blocking the inflow of the refrigerant.

In some embodiments, when the temperature sensing section 521 senses that the temperature of the battery pack exceeds the safe temperature range (that is, the temperature of the battery pack meets the second preset condition), the temperature of the battery pack (that is, the temperature of the shape memory alloy) is greater than the phase change temperature of the shape memory alloy, thereby enabling the contraction force of the shape memory alloy to be greater than the pulling force of the elastic member 532, enabling the shape memory alloy to pull the first door panel 511 to rotate along the first direction x, obliquely disposing the first door panel 511 relative to the bottom wall of the refrigerant flow channel 42, further disposing the second door panel 512 to be in parallel with the bottom wall of the refrigerant flow channel 42, and thus enabling the temperature control switch 5 to be in the open state to open the liquid inlet of the refrigerant flow channel 42 and thus allowing the inflow of the refrigerant.

In some embodiments, when the temperature sensing section 521 senses that the temperature of the battery pack falls back to the safe temperature range (that is, the temperature of the battery pack meets the first preset condition), the temperature of the battery pack (that is, the temperature of the shape memory alloy) is lower than the phase change temperature of the shape memory alloy, thereby enabling the contraction force of the shape memory alloy to be less than the pulling force of the elastic member 532, and enabling the elastic member 532 to pull the first door panel 511 to rotate along the second direction y, restoring the first door panel 511 to be arranged in parallel with the bottom wall of the refrigerant flow panel 42, further restoring the second door panel 512 to be arranged in parallel with the bottom wall of the refrigerant flow panel 42, thus restoring the temperature control switch 5 to be the closed state and re-blocking the liquid inlet of the refrigerant flow panel 42, and further blocking the inflow of the refrigerant.

In some embodiments, the temperature control switch 5 further includes a connecting frame 53. The valve 51, the hinge 513, the driving member 52, the groove 531, the guide post, and the elastic member 532 may all be disposed at the connecting frame 53. When the connecting frame 53 is connected to the refrigerant flow channel 42 of the liquid cooling plate 4, the connecting frame 53 may serve as the liquid inlet of the refrigerant flow channel 42.

In some embodiments, the connecting frame 53 is detachably connected to the refrigerant flow channel 42 of the liquid cooling plate 4, so that when the temperature control switch 5 fails, the liquid cooling plate 4 does not need to be entirely replaced, and the components such as the valve 51 and the hinge 513 may be replaced or maintained only by detaching the connecting frame 53 from the liquid cooling plate 4, which is beneficial to improving the maintenance efficiency and reducing the maintenance cost. In addition, such configuration is also beneficial to improving the universality of the temperature control switch 5, so that the temperature control switch 5 may be mounted at an inlet/outlet of any flow channel on the liquid cooling plate 4, so as to meet other needs of the liquid cooling plate 4 and the energy storage system.

In some embodiments, when one end of the elastic member 532 is fixedly connected to the bottom wall of the groove 531 and the other end of the elastic member 532 is fixedly connected to the first door panel 511, there is no need to provide a guide post in the groove 531, so as to further simplify the structure of the temperature control switch 5.

In some embodiments, the energy storage system further includes a liquid discharge valve (not shown in the drawings), which is mounted on the bottom wall of the groove 531. When the temperature of the battery pack meets the first preset condition, the liquid discharge valve is in an open state to discharge the refrigerant in the groove 531. When the temperature of the battery pack meets the second preset condition, the liquid discharge valve is in a closed state to block the refrigerant in the groove 531 from being discharged.

In some embodiments of the present disclosure, since the groove 531 is provided at the liquid inlet (or the connecting frame 53) of the refrigerant flow channel 42, when the temperature control switch 5 is in the open state, the refrigerant flows through the refrigerant flow channel 42, thereby enabling part of the refrigerant to flow into the groove 531 and to remain in the groove 531 after switching the temperature control switch 5 to the closed state. If too much refrigerant remains in the groove 531, there is a possibility that the residual refrigerant affects the normal operation of the temperature control switch 5 (for example, when the ambient temperature is too low, the refrigerant in the groove 531 may freeze, causing the valve 51 to be unable to rotate). Therefore, it is necessary to drain the residual refrigerant in the groove 531 to ensure the stability and reliability of the temperature control switch 5 during the operation.

In some embodiments, when the temperature of the battery pack meets the first preset condition, the temperature control switch 5 is in the closed state, then the refrigerant does not need to be circulated in the refrigerant flow channel 42, thereby enabling the liquid cooling plate 4 to independently cool the battery pack through the coolant. Therefore, the liquid discharge valve may be controlled to be in the open state to communicate the bottom wall of the groove 531 with the external environment or the recovery pipeline, thereby enabling the residual refrigerant to be discharged out of the groove 531.

If the reduced sealing performance of the temperature control switch 5 causes part of the refrigerant to permeate into the refrigerant channel 42, the refrigerant may also be discharged through the liquid discharge valve in the groove 531 for recycling.

In some embodiments, when the temperature of the battery pack meets the second preset condition, the temperature control switch 5 is in the open state, then the refrigerant needs to be circulated in the refrigerant flow channel 42, thereby enabling the liquid cooling plate 4 to cool the battery pack together through the coolant and the refrigerant. Therefore, the liquid discharge valve may be controlled to be in the closed state, so as to block the bottom wall of the groove 531 from the external environment or the recovery pipeline, thereby enabling the refrigerant to stably flow in the refrigerant flow channel 42, and thus enabling the refrigerant to absorb the heat generated by the battery pack.

Such configuration may enable operating states of the valve 51 and the liquid discharge valve to be opposite. When the valve 51 communicates with the refrigerant branch circuit 22 and the refrigerant flow panel 42, the sealed refrigerant flow panel 42 may be formed by closing the liquid discharge valve, thereby avoiding the risk of leakage of the refrigerant during the flow, reducing the loss of the refrigerant, ensuring the pressure stability of the refrigerant during the flow, and thus further ensuring the operating performance of the liquid cooling plate 4 for cooling the battery pack. When the valve 51 blocks the refrigerant branch circuit 22 and the refrigerant flow panel 42, an open refrigerant flow panel 42 may be formed by opening the liquid discharge valve, thereby actively discharging the residual refrigerant in the refrigerant flow panel 42, and reducing the pressure in the refrigerant flow panel 42, and thus reducing the influence of the residual refrigerant on the sealing performance of the valve 51. Additionally, during the operation of the energy storage system, the residual refrigerant is discharged out of the refrigerant flow channel 42 in time, further avoiding the risk of corrosion or impurity deposition of the refrigerant flow channel 42 caused by too long retention duration of the residual refrigerant, and thus ensuring the operation stability and reliability of the energy storage system.

In some embodiments, the liquid discharge valve located at the bottom wall of the groove 531 may be controlled by a sensor, a control system, a driving mechanism and a power supply module according to a preset program to change the operating state of the liquid discharge valve, or may be manually controlled by a worker according to the amount of residual refrigerant in the groove 531.

In some embodiments, both the valve 51 and the liquid discharge valve may be controlled by a sensor, a control system, a driving mechanism and a power supply module according to a preset program to change the operating state of the valve 51 and the liquid discharge valve, so that the valve 51 and the liquid discharge valve cooperate with each other, which is beneficial to improving the flexibility of the liquid cooling plate 4 during the switch of the operating states.

In some embodiments, along the thickness direction of the liquid cooling plate 4, the cross-sectional shape of the groove 531 may be rectangular, trapezoidal, triangular or semicircular.

In some embodiments of the present disclosure, such configuration may concentrate the refrigerant in the groove 531 at the bottom of the groove 531, thereby smoothly flowing the refrigerant out of the groove 531 after opening the liquid discharge valve, further ensuring that the residual refrigerant in the groove 531 is discharged as completely as possible, and thus reducing the possibility of refrigerant remaining in the groove 531.

In some embodiments, a volume of the groove 531 is V, which is in a range of 1ml≤V≤10ml.

In some embodiments of the present disclosure, the volume V of the groove 531 may be, for example, 1ml, 1.2ml, 1.4ml, 1.6ml, 1.8ml, 2ml, 2.2ml, 2.4ml, 2.6ml, 2.8ml, 3ml, 3.2ml, 3.4ml, 3.6ml, 3.8ml, 4ml, 4.2ml, 4.4ml, 4.6ml, 4.8ml, 5ml, 5.2ml, 5.4ml, 5.6ml, 5.8ml, 6ml, 6.2ml, 6.4ml, 6.6ml, 6.8ml, 7ml, 7.2ml, 7.4ml, 7.6ml, 7.8ml, 8ml, 8.2ml, 8.4ml, 8.6ml, 8.8ml, 9ml, 9.2ml, 9.4ml, 9.6ml, 9.8ml, 10ml, or the like.

When the volume of the groove 531 is in a range of 1ml≤V≤10ml and the groove 531 has an accommodating space sufficient to accommodate the guide post and the elastic member 532, it can be ensured that less refrigerant remains in the groove 531, which is beneficial to reducing the loss of the refrigerant, thereby reducing the possibility of the influence of the residual refrigerant on the operating state of the temperature control switch 5, and thus ensuring the operating performance of the liquid cooling plate 4 and the operating state of the energy storage system.

In some embodiments, as shown in FIG. 2, the energy storage system further includes a control system (not shown in the drawings) and a detection device 6. The control system is electrically or signally connected to the detection device 6. The control system is electrically or signally connected to the liquid discharge valve and/or the driving member 52. The detection device 6 is mounted on a side of the liquid cooling plate 4 facing the battery pack and is configured to detect the temperature of the battery pack. The control system is configured to control the driving member 52 to start or stop according to the detection result of the detection device 6, and/or to control the liquid discharge valve to open or close.

In some embodiments of the present disclosure, when the control system is electrically connected to or in signal connection with the driving member 52, the driving member 52 may be a driving mechanism such as a motor. The detection device 6 is configured to detect the temperature of the battery pack and transmit the detection result to the control system in real time, thereby enabling the control system to determine whether the temperature of the battery pack meets the first preset condition or the second preset condition according to the detection result of the detection device 6.

When the control system determines that the temperature of the battery pack meets the first preset condition, the control system may control the driving member 52 to drive the valve 51 to rotate along the second direction y, so as to block the refrigerant branch circuit 22 and the refrigerant flow channel 42. When the control system determines that the temperature of the battery pack meets the second preset condition, the control system may control the driving member 52 to drive the valve 51 to rotate along the first direction x, so as to communicate the refrigerant branch circuit 22 and the refrigerant flow channel 42.

Therefore, the control system may control the temperature control switch 5 to switch from the closed state to the open state when the temperature of the battery pack exceeds the safe temperature range, thereby enabling the liquid cooling plate 4 cool the battery pack through the coolant and the refrigerant, further improving the sensitivity and response speed of the driving member 52, and thus improving the safety of the battery pack in the high-power state or the high-temperature environment. The control system may control the temperature control switch 5 to switch from the open state to the closed state while reducing the temperature of the battery pack back to the safe temperature range, thereby enabling the liquid cooling plate 4 to independently cool the battery pack through the coolant, further reducing the control difficulty of the control system for the phase state, pressure and temperature of the refrigerant in the liquid cooling plate 4, and thus reducing the operation cost and maintenance cost of the energy storage system.

When the control system is electrically or signally connected to the liquid discharge valve, the detection device 6 is configured to detect the temperature of the battery pack and transmit the detection result to the control system in real time, thereby enabling the control system to determine whether the temperature of the battery pack meets the first preset condition or the second preset condition according to the detection result of the detection device 6.

When the control system determines that the temperature of the battery pack meets the first preset condition, since the temperature control switch 5 may be in the closed state, the control system may control the liquid discharge valve to be opened, so as to connect the bottom wall of the groove 531 with the external environment or the recovery pipeline, thereby discharging the residual refrigerant in the groove 531. When the control system determines that the temperature of the battery pack meets the second preset condition, since the temperature control switch 5 may be in the open state, the control system may control the liquid discharge valve to be closed to block the bottom wall of the groove 531 from the external environment or the recovery pipeline, thereby enabling the refrigerant to stably flow in the refrigerant flow channel 42, thus absorbing heat generated by the battery pack, and further improving the cooling capacity of the liquid cooling plate 4 for the battery pack.

In some embodiments, when the driving member 52 is the shape memory alloy, the control system may be electrically connected or signally connected to the detection device 6 and the liquid discharge valve, thereby enabling the shape memory alloy to actively change its operating state according to the temperature of the battery pack, further improving the sensitivity of the driving member 52, enabling the control system to control the operating state of the liquid discharge valve according to the signal of the detection device 6, thus reducing the complexity and the design difficulty of the control system. When the driving member 52 is a driving mechanism such as a motor, the control system may be electrically connected or signally connected to the detection device 6, the liquid discharge valve and the driving member 52, respectively, thereby enabling the control system to control the operating states of the driving member 52 and the liquid discharge valve according to the signal of the detection device 6, better coordinating the operating states of the driving member 52 and the liquid discharge valve, and thus enabling more compact cooperation of the valve 51 and the liquid discharge valve during the operation.

In some embodiments, as shown in FIG. 2, the liquid cooling plate 4 includes at least two coolant flow channels 41 and at least one refrigerant flow channel 42. The coolant flow channels 41 and the refrigerant flow channels 42 are alternately arranged and distributed at intervals along a length direction and/or a width direction of the liquid cooling plate 4.

The liquid inlet of the coolant flow channel 41 is disposed adjacent to the liquid outlet of the refrigerant flow channel 42, and the liquid outlet of the coolant flow channel 41 is disposed adjacent to the liquid inlet of the refrigerant flow channel 42.

In some embodiments of the present disclosure, taking the liquid cooling plate 4 including two coolant flow channels 41 and one refrigerant flow channel 42 as an example, along the length direction and/or the width direction of the liquid cooling plate 4, the two coolant flow channels 41 are arranged at intervals, the refrigerant flow channel 42 is located between the two coolant flow channels 41, there is at least a spacing between the two coolant flow channels 41. In addition, the three flow channels are located in a same plane.

By alternately arranging the coolant flow channel 41 and the refrigerant flow channel 42 along the length direction and/or the width direction of the liquid cooling plate 4, the distribution of the coolant flow channel 41 and the refrigerant flow channel 42 on the liquid cooling plate 4 may be more uniform, thereby improving the uniformity of cooling the battery pack by the liquid cooling plate 4, thus avoiding the risk of local overheating of the battery pack during the charging and discharging process, and further improving the safety of the battery pack.

Since the coolant flow channel 41 and the refrigerant flow channel 42 may be alternately arranged in a same plane of the liquid cooling plate 4, the configuration of multilayer stacking of flow channels can be avoided, thereby reducing the overall thickness of the liquid cooling plate 4, reducing the size of the space occupied by the liquid cooling plate 4 in the energy storage system, and thus meeting the need of compact layout inside the energy storage system.

By arranging the spacing distribution between adjacent flow channels, it can be ensured that the coolant in the coolant flow channel 41 and the refrigerant in the refrigerant flow channel 42 may fully absorb the heat generated by the battery pack, which is beneficial to improving the heat exchange efficiency.

In addition, by arranging the coolant inlet 411 adjacent to the refrigerant outlet 422 and arranging the coolant outlet 412 adjacent to the refrigerant inlet 421, the coolant flow channels 41 and the refrigerant flow channels 42 may be independent of each other. During the operation of the energy storage system, if any flow channel is blocked or leaked, the other flow channels may still provide cooling capability. In addition, by arranging the flow directions of the coolant and the refrigerant to be opposite, the temperature difference between the liquid inlet of the coolant flow channel 41 and the liquid inlet of the refrigerant flow channel 42 is relatively small, which is beneficial to improving the uniformity of heat exchange between the entire liquid cooling plate 4 and the battery pack, thereby improving the stability and reliability of the energy storage system during the operation.

In some embodiments, as shown in FIG. 2, along the length direction and/or the width direction of the liquid cooling plate 4, the two coolant flow channels 41 are symmetrically distributed relative to the refrigerant flow channel 42. A spacing between adjacent flow channels is L, and L is in a range of 25mm≤L≤45mm.

In some embodiments of the present disclosure, the two coolant flow channels 41 are symmetrically distributed relative to the refrigerant flow channel 42, thereby enabling the spacing between the flow channels to be equal, further improving distribution uniformity of the coolant flow channel 41 and the refrigerant flow channel 42 on the liquid cooling plate 4, avoiding the non-uniformity of heat exchange between the liquid cooling plate 4 and the battery pack due to asymmetric layout of the flow channels, thus improving the safety and reliability of the battery pack during charging and discharging process, and ensuring the stable operation of the energy storage system.

In some embodiments, the spacing L between adjacent flow channels may be, for example, 25mm, 26mm, 27mm, 28mm, 29mm, 30mm, 31mm, 32mm, 33mm, 34mm, 35mm, 36mm, 37mm, 38mm, 39mm, 40mm, 41mm, 42mm, 43mm, 44mm, 45mm, or the like.

When the spacing between adjacent flow channels is in a range of 25mm≤L≤45mm, it can be ensured that the coolant flow channel 41 and the refrigerant flow channel 42 occupy a relatively large area ratio on the liquid cooling plate 4, and the interaction between adjacent flow channels is reduced, thereby ensuring that the coolant and the refrigerant may fully absorb heat generated by the battery pack, and thus improving the heat exchange efficiency with the liquid cooling plate 4.

In some embodiments, along the thickness direction of the liquid cooling plate 4, a projection area of the coolant flow channel 41 is S1, a projection area of the refrigerant flow channel 42 is S2, and S1 and S2 are in a range of 0.5≤S2/S1≤1.

In some embodiments of the present disclosure, a ratio of a projected area between the refrigerant flow channel 42 and the coolant flow channel 41 may be, for example, 0.5, 0.52, 0.54, 0.56, 0.58, 0.6, 0.62, 0.64, 0.66, 0.68, 0.7, 0.72, 0.74, 0.76, 0.78, 0.8, 0.82, 0.84, 0.86, 0.88, 0.9, 0.92, 0.94, 0.96, 0.98, 1, or the like.

When the ratio of the projected area between the refrigerant flow channel 42 and the coolant flow channel 41 is in a range of 0.5≤S2/S1≤1, a ratio of the area occupied by the coolant flow channel 41 on the liquid cooling plate 4 is greater than a ratio of the area occupied by the refrigerant flow channel 42 on the liquid cooling plate 4, thereby enabling the liquid cooling plate 4 to have great heat exchange capability when the liquid cooling plate 4 independently circulates the coolant therein, further enabling the liquid cooling plate 4 to effectively cool the battery pack, and thus ensuring the safety and reliability of the battery pack during the charging and discharging process.

In some embodiments, along the length direction and/or width direction of the liquid cooling plate 4, a number of the coolant flow channels 41 is a, and a number of the refrigerant flow channels 42 is b, a and b are in a range of a-b=1.

In some embodiments, along the thickness direction of the liquid cooling plate 4, a flow cross-sectional area of the coolant flow channel 41 is S3, a flow cross-sectional area of the refrigerant flow channel 42 is S4, S3 and S4 are in a range of 0.5≤S3/S4≤1.

In some embodiments of the present disclosure, a ratio of the flow cross-sectional area between the coolant flow channel 41 and the refrigerant flow channel 42 may be, for example, 0.5, 0.51, 0.53, 0.55, 0.57, 0.59, 0.61, 0.63, 0.65, 0.67, 0.69, 0.71, 0.73, 0.75, 0.79, 0.81, 0.83, 0.85, 0.87, 0.89, 0.91, 0.93, 0.95, 0.97, 0.99, 1, or the like.

When the ratio of the flow cross-sectional area between the coolant flow channel 41 and the refrigerant flow channel 42 is in a range of 0.5≤S3/S4≤1, the flow cross-sectional area of any coolant flow channel 41 does not exceed the flow cross-sectional area of any refrigerant flow channel 42, thereby enabling the refrigerant flow channel 42 to reduce the flow velocity of the refrigerant during the flow through the relatively large flow cross-sectional area, reducing the pressure drop, ensuring that the refrigerant can fully absorb the heat generated by the battery pack, thus providing better cooling capacity. Additionally, during the process of cooling the battery pack by the liquid cooling plate 4 through the coolant and the refrigerant, it is beneficial to significantly improving the heat exchange efficiency of the liquid cooling plate 4 and improving the uniformity of cooling the battery pack, thereby ensuring the safety and reliability of the battery pack during the charging and discharging.

In some embodiments, along the thickness direction of the liquid cooling plate 4, projections of the coolant flow channel 41 and the refrigerant flow channel 42 are linear structures.

In some embodiments of the present disclosure, shapes of the coolant flow channel 41 and the refrigerant flow channel 42 may be linear structures such as a straight line, a curved line, and a serpentine line. Such configuration may enable an extension length of each flow channel to be relatively long, so as to increase a flow duration of the coolant and the refrigerant in each flow channel, thereby improving the effective utilization of the coolant and the refrigerant. Additionally, along the thickness direction of the liquid cooling plate 4, the projections of the coolant flow channel 41 and the refrigerant flow channel 42 may cover a relatively large area of the liquid cooling plate 4, thereby improving the heat exchange area between the liquid cooling plate 4 and the battery pack, and further improving the efficiency of cooling the battery pack by the liquid cooling plate 4 and the heat exchange efficiency between the liquid cooling plate 4 and the battery pack.

Some embodiments of the present disclosure further provide a method for controlling liquid feeding and discharging for an energy storage system. As shown in FIG. 2, the detection device 6 includes a first detection member 61 and a second detection member 62 electrically connected or signally connected to the control system. Along the thickness direction of the liquid cooling plate 4, the first detection member 61 and the second detection member 62 are both mounted on a side of the liquid cooling plate 4 facing the battery pack. The first detection member 61 is located at a liquid inlet of the coolant flow channel 41, and the second detection member 62 is located at a liquid outlet of the coolant flow channel 41.

The first detection member 61 detects a first temperature T1 of the battery pack at the liquid inlet of the coolant flow channel 41. The second detection member 62 detects a second temperature T2 of the battery pack at the liquid outlet of the coolant flow channel 41. When the first temperature and the second temperature are in a range of T1-T2<2°C, or the second temperature is in a range of T2<25°C, the control system controls the valve 51 to rotate along the second direction y and controls the liquid discharge valve to open so as to discharge the refrigerant in the groove 531. When the first temperature and the second temperature are in a range of T1-T2≥2°C, or the second temperature is in a range of T2≥25°C, the control system controls the valve 51 to rotate along the first direction x and controls the liquid discharge valve to close so as to block the refrigerant in the groove 531 from being discharged.

When the temperature of the battery pack meets the first preset condition, the first preset condition is that the first temperature and the second temperature are in a range of T1-T2<2°C, or the second temperature meets T2<25°C. When the temperature of the battery pack is in a range of the second preset condition, the second preset condition is that both the first temperature and the second temperature are in a range of T1-T2≥2°C, or the second temperature is in a range of T2≥25°C.

When the liquid cooling plate 4 separately cools the battery pack by using the coolant, since the coolant in the coolant flow channel 41 uni-directionally flows along the extension direction of the coolant flow channel 41, the heat absorption capability of the coolant gradually decreases along with flow of the coolant, resulting in a temperature difference exists between a temperature of a cell located at the liquid outlet of the coolant flow channel 41 and a temperature of a cell located at the liquid inlet of the coolant flow channel 41 (that is, there is a difference between the first temperature and the second temperature), thereby easily reducing uniformity of cooling of the battery pack by the liquid cooling plate 4. In addition, during the charging and discharging process of the battery pack, if the temperature difference between the cells in the battery pack is relatively large, the charging and discharging efficiency of the battery pack is easily reduced and the thermal runaway risk is improved, thereby affecting the service life of the battery pack and the stability and reliability of the energy storage system during the operation.

Therefore, the control system needs to control the temperature control switch 5 to change the operating state when the temperature of the battery pack exceeds the safe temperature range. In addition, the control system also needs to control the temperature control switch 5 to change the operating state when the temperature difference of the cell in the battery pack exceeds the safe temperature difference range, so as to ensure the charging and discharging efficiency of the battery pack and reduce the possibility of thermal runaway of the battery pack, thereby prolonging the service life of the battery pack and improving the stability and reliability of the energy storage system during the operation.

Therefore, in the method for controlling liquid feeding and discharging according to some embodiments, the first preset condition is that T1 and T2 are in a range of T1-T2<2°C, or T2 is in a range of T2<25°C, and the second preset condition is that T1 and T2 are in a range of T1-T2≥2°C, or T2 is in a range of T2≥25°C, thereby enabling the temperature control switch 5 to switch from the closed state to the open state when the battery pack temperature exceeds the safe temperature range, and enabling the temperature control switch 5 to switch from the closed state to the open state when the temperature difference of the cell in the battery pack exceeds the safe temperature difference range.

The temperature control switch 5 may be disposed at a liquid inlet of the refrigerant flow channel 42 for controlling the connection or disconnection between the refrigerant flow channel 42 and the refrigerant branch circuit 22. When the temperature of the battery pack meets the first preset condition (that is, T1 and T2 are in a range of T1-T2<2°C, or T2 is in a range of T2<25°C), the temperature control switch 5 is in a closed state, while the liquid discharge valve is in an open state, thereby enabling the liquid cooling plate 4 to separately cool the battery pack through the coolant. When the temperature of the battery pack meets the second preset condition (that is, T1 and T2 are in a range of T1-T2≥2°C, or T2 is in a range of T2≥25°C), the temperature control switch 5 is in an open state, while the liquid discharge valve is in a closed state, thereby enabling the liquid cooling plate 4 to jointly cool the battery pack through the coolant and the refrigerant.

In some embodiments, when the temperature of the battery pack meets the first preset condition (that is, the first temperature and the second temperature are in a range of T1-T2<2°C, or the second temperature is in a range of T2<25°C), the temperature control switch 5 is in a closed state, and the liquid discharge valve is in an open state. Then the refrigerant only needs to flow in the refrigerant main circuit 21, so that the high-temperature refrigerant that has absorbed the heat of the coolant may flow into the heat dissipation assembly located on the refrigerant main circuit 21 through the refrigerant main circuit 21 for heat dissipation. After dissipating the heat, the high-temperature refrigerant may flow back into the refrigerant pipeline of the heat exchange device 3 through the refrigerant main circuit 21 for heat exchange with the coolant, so as to continue to absorb the heat of the high-temperature coolant. Additionally, the refrigerant does not need to be circulated in the refrigerant flow channel 42, thereby enabling the liquid cooling plate 4 to independently cool the battery pack through the coolant. Therefore, the liquid discharge valve may be controlled to be in the open state to communicate the bottom wall of the groove 531 with the external environment or the recovery pipeline, thereby enabling the residual refrigerant to be discharged out of the groove 531.

In some embodiments, when the temperature of the battery pack meets a second preset condition (that is, the first temperature and the second temperature are in a range of T1-T2≥2°C, or the second temperature is in a range of T2≥25°C), the temperature control switch 5 is in an open state, and the liquid discharge valve is in a closed state. Then the refrigerant needs to flow in the refrigerant main circuit 21 and the refrigerant branch circuit 22 at the same time, thereby branching the low-temperature refrigerant that has dissipated heat. One part of the refrigerant flows into the refrigerant pipeline of the heat exchange device 3 through the refrigerant main circuit 21 to exchange heat with the coolant, and can converge with the high-temperature refrigerant flowing out of the refrigerant branch circuit 22 through the refrigerant main circuit 21 after absorbing the heat. The other part of the refrigerant flows into the refrigerant flow channel 42 of the liquid cooling plate 4 through the refrigerant branch circuit 22 to absorb the heat generated by the battery pack, and can flow back to the refrigerant main circuit 21 through the refrigerant branch circuit 22 after absorbing the heat for confluence. After confluence, the high-temperature refrigerant flows into the heat dissipation assembly located on the refrigerant main circuit 21 through the refrigerant main circuit 21 to dissipate heat, and flows into the heat exchange device 3 and the liquid cooling plate 4 again after dissipating the heat, so as to continue to absorb the heat of the high-temperature coolant and the heat of the battery pack, thereby realizing intermittent flow of the refrigerant in the liquid cooling plate 4. Additionally, the refrigerant needs to be circulated in the refrigerant flow channel 42, thereby enabling the liquid cooling plate 4 to cool the battery pack together through the coolant and the refrigerant. Therefore, the liquid discharge valve may be controlled to be in the closed state, so as to block the bottom wall of the groove 531 from the external environment or the recovery pipeline, thereby enabling the refrigerant to stably flow in the refrigerant flow channel 42, and thus enabling the refrigerant to absorb the heat generated by the battery pack.

Therefore, in some embodiments of the present disclosure, the control system may not only control the temperature control switch 5 to be switched from the open state to the closed state when the temperature of the battery pack is in a safe temperature range, but also control the temperature control switch 5 to be switched from the open state to the closed state when the temperature difference of the cell is in the safe temperature difference range, thereby enabling the liquid cooling plate 4 to independently cool the battery pack through the coolant. Additionally, the control system may control the temperature control switch 5 to be switched from the closed state to the open state when the temperature of the battery pack exceeds the safe temperature range, and may control the temperature control switch 5 to be switched from the closed state to the open state when the temperature difference of the cell exceeds the safe temperature difference range, thereby enabling the liquid cooling plate 4 cool the battery pack through the coolant and the refrigerant.

Through such configuration, the refrigerant can flow into the liquid cooling plate 4 under the specific operating condition, thereby achieving continuous flow of the coolant in the liquid cooling plate 4 and the intermittent flow of the refrigerant in the liquid cooling plate 4, which helps to improving the safety of the battery pack in a high-power state or a high-temperature environment, and improving the uniformity of cooling the battery pack in any operating state by the liquid cooling plate 4, thus reducing the possibility of thermal runaway of the battery pack during the charging and discharging process, and improving the stability and reliability of the energy storage system during the operation.

In some embodiments, in the method for controlling liquid feeding and discharging according to the present embodiment, when the driving member 52 of the temperature control switch 5 is the shape memory alloy, the control system only needs to control the opening or closing of the liquid outlet valve according to the detection results of the first detection member 61 and the second detection member 62, and the valve 51 may be automatically opened or closed under the driving of the shape memory alloy. When the driving member 52 of the temperature control switch 5 is a driving mechanism with a power supply module, the control system needs to simultaneously control the operating states of the driving member 52 and the liquid outlet valve according to the detection results of the first detection member 61 and the second detection member 62.

In some embodiments, when the driving member 52 is a shape memory alloy, the second detection member 62 is disposed adjacent to the shape memory alloy along the length direction and the width direction of the liquid cooling plate 4. Such configuration may move the driving member 52 and the liquid discharge valve simultaneously. That is, when the driving member 52 deforms, the control system may control the liquid discharge valve to switch from the open state to the closed state, thereby avoiding the risk of leakage of the liquid discharge valve during the flowing of the refrigerant into the refrigerant flow channel 42, or when the driving member 52 deforms, the control system may control the liquid discharge valve to switch from the closed state to the open state, so as to discharge the residual refrigerant in the groove 531 in time, thereby reducing the possibility that the residual refrigerant affects the operating performance of the liquid cooling plate 4.

The structures, features and effects of the present disclosure are described above in detail according to the embodiments shown in the drawings. The above description is merely preferred embodiments of the present disclosure, but the present disclosure is not limited to the implementation scope shown in the drawings. The scope of the present disclosure shall be defined by the appended claims.

## Claims

1. An energy storage system, comprising:
a coolant loop;
a refrigerant loop comprising a refrigerant main circuit and a refrigerant branch circuit;
a heat exchange device comprising a coolant pipeline and a refrigerant pipeline, wherein the heat exchange device communicates with the coolant loop through the coolant pipeline, and the heat exchange device communicates with the refrigerant main circuit through the refrigerant pipeline;
a liquid cooling plate comprising a coolant flow channel and a refrigerant flow channel, wherein the liquid cooling plate communicates with the coolant loop through the coolant flow channel, and the liquid cooling plate communicates with the refrigerant branch circuit through the refrigerant flow channel; and
a battery pack attached to the liquid cooling plate,
wherein a liquid inlet of the refrigerant flow channel is provided with a temperature control switch, when a temperature of the battery pack meets a first preset condition, the temperature control switch is in a closed state, and the liquid cooling plate cools the battery pack through coolant; when a temperature of the battery pack meets a second preset condition, the temperature control switch is in an open state, and the liquid cooling plate cools the battery pack through coolant and refrigerant.

2. The energy storage system according to claim 1, wherein the temperature control switch comprises a valve and a driving member, the valve is mounted in the refrigerant flow channel and rotatably connected to the refrigerant flow channel, and the driving member is fixedly connected to the valve and configured to drive the valve to rotate relative to the refrigerant flow channel, so as to open or close the liquid inlet of the refrigerant flow channel; and
the valve further comprises a first door panel and a second door panel connected to each other, the first door panel is provided with a through hole, the first door panel is located on a side of the second door panel away from the liquid inlet of the refrigerant flow channel, and a first included angle is formed between the first door panel and the second door panel.

3. The energy storage system according to claim 2, wherein the driving member is a shape memory alloy, and along a thickness direction of the liquid cooling plate, one end of the shape memory alloy is connected to the first door panel, and another end of the shape memory alloy is connected to a top wall of the refrigerant flow channel;
when the temperature of the battery pack meets the second preset condition, the shape memory alloy contracts and drives the first door panel to move along a first direction to open the liquid inlet of the refrigerant flow channel;
when the temperature of the battery pack meets the first preset condition, the shape memory alloy returns to an initial state and drives the first door panel to move along a second direction to close the liquid inlet of the refrigerant flow channel,
wherein the first direction is opposite to the second direction.

4. The energy storage system according to claim 2, wherein the refrigerant flow channel is provided with a groove, the temperature control switch comprises a guide post and an elastic member, the guide post is provided on a bottom wall of the groove, the elastic member is sleeved on an outer wall of the guide post, one end of the elastic member is connected to the bottom wall of the groove, and another end of the elastic member is connected to the first door panel.

5. The energy storage system according to claim 4, wherein the energy storage system further comprises a liquid discharge valve mounted on the bottom wall of the groove;
when a temperature of the battery pack meets the first preset condition, the liquid discharge valve is in an open state to discharge refrigerant in the groove; and
when a temperature of the battery pack meets the second preset condition, the liquid discharge valve is in a closed state to block the refrigerant in the groove from being discharged.

6. The energy storage system according to claim 5, wherein a volume V of the groove is in a range of 1ml≤V≤10ml.

7. The energy storage system according to claim 5, further comprising a control system and a detection device, wherein the control system is electrically or signally connected to the detection device, and the control system is further electrically or signally connected to the liquid discharge valve and/or the driving member, the detection device is mounted on a side of the liquid cooling plate facing the battery pack and is configured to detect the temperature of the battery pack, and the control system is configured to control the driving member to start or stop according to a detection result of the detection device, and/or configured to control the liquid discharge valve to open or close.

8. The energy storage system according to claim 2, wherein the temperature control switch further includes a hinge, the valve is rotatably connected to an inner wall of the refrigerant flow channel through the hinge, so that the temperature control switch is opened or closed in a manner of rotating the valve relative to the refrigerant flow channel.

9. The energy storage system according to claim 2, wherein the included angle α between the first door panel and the second door panel is in a range of 120°≤α≤150°.

10. The energy storage system according to any one of claims 1 to 9, wherein the liquid cooling plate comprises at least two coolant flow channels and at least one refrigerant flow channel, and the coolant flow channels and the refrigerant flow channel are alternately arranged and distributed at intervals along a length direction and/or a width direction of the liquid cooling plate; and
wherein the liquid inlet of the coolant flow channel is disposed adjacent to a liquid outlet of the refrigerant flow channel, and the liquid outlet of the coolant flow channel is disposed adjacent to the liquid inlet of the refrigerant flow channel.

11. The energy storage system according to claim 10, wherein along the length direction and/or the width direction of the liquid cooling plate, the two coolant flow channels are symmetrically distributed relative to the refrigerant flow channel, a spacing between adjacent flow channels is L, and L is in a range of 25mm≤L≤45mm.

12. The energy storage system according to claim 10, wherein along a length direction and/or a width direction of the liquid cooling plate, a number of the coolant flow channels is a, and a number of the refrigerant flow channels is b, a and b satisfy: a-b=1; and/or
along a thickness direction of the liquid cooling plate, a flow cross-sectional area of the coolant flow channel is S3, a flow cross-sectional area of the refrigerant flow channel is S4, and a ratio of S3 to S4 is in a range of 0.5≤S3/S4≤1.

13. The energy storage system according to any one of claims 1 to 12, wherein along a thickness direction of the liquid cooling plate, the liquid cooling plate comprises a heat exchange plate and a flow channel plate, a side of the heat exchange plate is attached to the battery pack, and another side of the heat exchange plate is connected to the flow channel plate to enclose the coolant flow channel and the refrigerant flow channel.

14. The energy storage system according to any one of claims 1 to 13, further comprising a compressor, a heat dissipation device and an expansion valve that are disposed in the refrigerant main circuit, wherein one end of the compressor is in communication with a liquid outlet of the refrigerant pipeline, another end of the compressor is in communication with one end of the heat dissipation device, another end of the heat dissipation device is in communication with the one end of expansion valve, and another end of the expansion valve is in communication with a liquid inlet of the refrigerant pipeline.

15. A method for controlling liquid feeding and discharging for an energy storage system, wherein the energy storage system comprises a liquid cooling plate, a battery pack, a valve and a liquid discharge valve, the liquid cooling plate comprises a coolant flow channel and a refrigerant flow channel, and the method comprises:
detecting a first temperature T1 of the battery pack at the liquid inlet of the coolant flow channel;
detecting a second temperature T2 of the battery pack at the liquid outlet of the coolant flow channel;
when the first temperature and the second temperature are in a range of T1-T2<2°C, or the second temperature is in a range of T2<25°C, controlling the valve to rotate along the second direction y, and controlling the liquid discharge valve to open to discharge refrigerant in the refrigerant flow channel; and
when the first temperature and the second temperature are in a range of T1-T2≥2°C, or the second temperature is in a range of T2≥25°C, controlling the valve to rotate along the first direction x, and controlling the liquid discharge valve to be closed to block the refrigerant in the refrigerant flow channel from being discharged.
